# EUROPÄISCHE PATENTSCHRIFT

(11) **EP 2 221 697 B1**
(45) Veröffentlichungstag und Bekanntmachung des Hinweises auf die Patenterteilung: **15.01.2020**
(21) Anmeldenummer: 09002479.5
(22) Anmeldetag: 20.02.2009
(51) Int. Cl.: H04L 12/26

(54) **Verfahren zum Test eines Steuergeräts und Testvorrichtung**
Method for testing a control device and testing device
Procédé de test d'un appareil de commande et dispositif de test

(43) Veröffentlichungstag der Anmeldung: 25.08.2010
(73) Patentinhaber: dSPACE digital signal processing and control engineering GmbH, 33102 Paderborn (DE)
(72) Erfinder: Schnelte, Matthias, 33098 Paderborn (DE); Thiessen, Christine, 33189 Schlangen (DE); Lamberg, Klaus Dr., 33184 Altenbeken-Schwaney (DE)
(74) Vertreter: Gesthuysen Patent- und Rechtsanwälte

(56) Entgegenhaltungen:
- MABAJAN R ET AL: "A multi-language goal-tree based functional test planning system" PROCEEDINGS INTERNATIONAL TEST CONFERENCE 2002. ITC 2002. BALTIMORE, MD, OCT. 7-10, 2002; [INTERNATIONAL TEST CONFERENCE], NEW YORK, NY : IEEE, US, 7. Oktober 2002 (2002-10-07), Seiten 472-481, XP010609774 ISBN: 978-0-7803-7542-0

## Beschreibung

Die Erfindung betrifft ein Verfahren zum Test eines Steuergeräts mit einer Testvorrichtung, wobei das Steuergerät wenigstens eine Zustandsgröße und wenigstens eine eine Zeitabhängigkeit beinhaltende Ist-Funktionalität aufweist und das Steuergerät und die Testvorrichtung über eine Signalschnittstelle miteinander verbunden sind. Ferner betrifft die Erfindung auch eine Vorrichtung umfassend eine Testvorrichtung und ein mit der Testvorrichtung verbundenes Steuergerät, mit der das vorgenannte Verfahren an dem Steuergerät durchgeführt werden kann.

Verfahren zum Test eines Steuergeräts mit einer Testvorrichtung über eine Signalschnittstelle werden in der industriellen Praxis durchgeführt seitdem Steuergeräte eingesetzt und auf ihre Funktionalität hin überprüft werden.

Unter einem Steuergerät ist hier eine jegliche rechnerbasierte gerätetechnische Einrichtung zu verstehen, die durch Programmierung mit einer Funktionalität versehbar ist, wobei es nicht darauf ankommt, ob die gerätetechnische Ausstattung des Steuergeräts lediglich eine einmalige oder eine mehrmalige Programmierung zulässt. Das Steuergerät ist üblicherweise dazu gedacht, im einsatzfähigen Zustand mit einem physikalischen Prozeß verbunden zu werden, wobei es über seine Signalschnittstelle auf den Prozeß einwirkt und den Prozeß über seine Signalstelle durch Aufnahme von Messdaten beobachtet. Bei dem Steuergerät kann es sich beispielsweise um einen Einplatinenrechner mit entsprechender I/O-Funktionalität handeln, es kann sich jedoch auch um ein komplexeres, verteiltes Rechnersystem handelt; das hier in Rede stehende Verfahren zum Test eines solchen Steuergeräts ist unabhängig von seiner konkreten Hardwareausstattung und gerätetechnischen Ausgestaltung.

Steuergeräte, die beispielsweise in einem Kraftfahrzeug verwendet werden, weisen in der Regel einen immensen - und stetig zunehmenden - Funktionsumfang auf, der ohne weiteres mehrere hundert oder auch mehrere tausend Einzel-Funktionalitäten umfasst. Die Funktionalität, die von dem Steuergerät erwartet wird - also die Soll-Funktionalität - ergibt sich beispielsweise aus Pflichtenheften oder anderen Spezifikationen, wobei eine große Herausforderung darin besteht, sicherzustellen, dass die implementierte Ist-Funktionalität des Steuergeräts tatsächlich auch mit der gewünschten und vorgegebenen Soll-Funktionalität übereinstimmt.

Der Funktionstest eines Steuergeräts macht es insgesamt erforderlich, dass die Soll-Funktionalität analysiert und letztlich in eine Anforderung auf Signalebene übersetzt wird, das Steuergerät in einen Zustand versetzt wird, der es ermöglicht, dass bei Vorliegen einer bestimmten Aktion eine erwartete - nämlich durch die Soll-Funktionalität vorgegebene - Reaktion des Steuergeräts hervorgerufen wird, die üblicherweise signalmäßig beobachtet werden kann. Der eigentliche Test des Steuergeräts besteht also in dem Übersetzen der Testfälle in Signalmuster, der Beaufschlagung des Steuergeräts über die Signalschnittstelle mit den Signalmustern durch die Testvorrichtung und dem Erfassen der interessierenden Zustandsgrößen des Steuergeräts mit der Testvorrichtung, wobei selbstverständlich der Vergleich von Ist-Funktionalität und Soll-Funktionalität zu der interessierenden Aussage führt, ob das Steuergerät die gewünschte Soll-Funktionalität aufweist.

Es ist ohne weiteres ersichtlich, dass das Analysieren der Soll-Funktionalität und das manuelle Umsetzen der Soll-Funktionalität in Anforderungen und die weitere manuelle Umsetzung der Anforderungen in Testfälle - eindeutige Testsituationen, in die das Steuergerät gebracht wird - und letztlich das Übersetzen der Testfälle in Signalmuster extrem zeitaufwendig und fehleranfällig ist, so dass ganz allgemein der Wunsch besteht, die vorgenannten Verfahrensschritte zum Test eines Steuergeräts möglichst weitgehend zu automatisieren.

Aus dem Stand der Technik sind verschiedene Versuche bekannt, Verfahren zum Test - wenn auch nicht konkret eines Steuergeräts, so doch ganz allgemein - einer technischen Einrichtung zu automatisieren, insbesondere also die Soll-Funktionalität zu erfassen, in formale Anforderungen und Testfälle zu übersetzen, aus denen dann der konkrete Testvorgang resultiert.

Ein vergleichsweise aufwendiges Verfahren ist aus dem Aufsatz "Obtaining Models for Test Generation from Natural-language-like Functional Specifications" von M. W. Esser und P. Struss bekannt (in G. Biswas et al. (eds), DX'07, 18th International Workshop on Principles of Diagnoses, May 29-31, 2007, Nashville, USA) bekannt. Dieses Verfahren befasst sich mit der Testfallgenerierung zum Test von Software im automotiven Bereich. Hier werden Anforderungen formalsprachlich durch eine Auswahl von Lückentexten erfasst, die dazu geeignet sind, typische Anforderungen zu berücksichtigen, wobei dies üblicherweise konditionale Konstruktionen (wenn-dann) und auch Zeitabhängigkeiten in Form der Erfassung der Dauer von Zuständen umfasst. Der Ansatz beruht darauf, dass aus den ausgefüllten Lückentexten eine formale Repräsentation der Soll-Funktionalität gewonnen wird, die das System (Steuergerät) im fehlerfreien Fall beschreibt. Nachfolgend werden aus dem fehlerfreien Modell (ok-Modell) Fehlermodelle abgeleitet, und abschließend werden solche Signalmuster gesucht, bei denen der im Fehlermodell absichtlich hinterlegte Fehler beobachtbar ist, bei denen sich also das Verhalten des ok-Modells von dem des Fehlermodells unterscheidet; dies ist vergleichsweise aufwendig ist, da zu jedem Fehler auch ein Fehlermodell neben dem ok-Modell vorliegen muss.

Ein anderes Verfahren zum Test eines technischen Systems ist beispielsweise aus dem Aufsatz "AI-Planner Assisted Test Generation" von A. K. Amschler Andrews et al. bekannt (in Software Quality Journal, 10, 225-259, 2002, Kluwer Academic Publishers). In diesem Aufsatz wird die automatische Testfallgenerierung für einen Datenband-Silo beschrieben, wobei die Soll-Funktionalität des Geräts modellbasiert - nämlich durch einen Zustandsautomaten - erfasst wird und Zeitabhängigkeiten keine Berücksichtigung finden.

Die Berücksichtigung von Zeitabhängigkeiten ist jedoch für den Test von vielen Steuergeräten essentiell, da die implementierten Funktionalitäten eine solche Zeitabhängigkeit oftmals aufweisen und der Test eines Steuergeräts ohne die Berücksichtigung von Zeitabhängigkeiten unvollständig und daher wenig aussagekräftig ist.

Aufgabe der vorliegenden Erfindung ist es daher, die aus dem Stand der Technik bekannten Nachteile - zumindest teilweise - zu vermeiden, insbesondere ein solches Verfahren zum Test eines Steuergeräts anzugeben, das eine möglichst einfache und flexible Erfassung der Soll-Funktionalität eines Steuergeräts ermöglicht und die Zeitabhängigkeit der Soll-Funktionalität möglichst umfassend bei der Testfallgenerierung berücksichtigt.

Die aufgezeigte Aufgabe ist erfindungsgemäß zunächst und im Wesentlichen bei dem in Rede stehende Verfahren zum Test eines Steuergeräts mit einer Testvorrichtung dadurch gelöst, dass die folgenden Verfahrensschritte ausgeführt werden:
- formalsprachliche Erfassung wenigstens einer eine Zeitabhängigkeit beinhaltenden Soll-Funktionalität als Anforderung, wobei mit der formalsprachlichen Erfassung der Zeitabhängigkeit beinhaltenden Soll-Funktionalität gemeint ist, dass die formale Sprache semantisch eindeutig ist, womit umgangssprachliche Ungenauigkeiten vermieden werden und wobei die Soll-Funktionalität wenigstens eine Aktion und wenigstens eine erwartete Reaktion umfasst,
- Erzeugen wenigstens eines die Gesamtheit der Anforderungen darstellendes Anforderungsmodells aus den Anforderungen,
- Erzeugung von Testfällen durch wenigstens eine in dem Anforderungsmodell durchgeführten Erreichbarkeitsanalyse unter Berücksichtigung der Zeitabhängigkeit der Soll-Funktionalität, ohne über den Umweg eines Fehlermodells der Soll-Funktionalität zu gehen, wobei die Zeitabhängigkeit der Soll-Funktionalität in der Vorgabe eines Reaktionszeitintervalls der erwarteten Reaktion besteht,
- Übersetzen der Testfälle in Signalmuster, Beaufschlagung des Steuergeräts über die Signalschnittstelle mit den Signalmustern durch die Testvorrichtung und Erfassen der interessierenden Zustandsgrößen des Steuergeräts mit der Testvorrichtung.

Das erfindungsgemäße Verfahren zum Test eines Steuergeräts ist in vielerlei Hinsicht vorteilhaft, unter anderem deshalb, weil es den direkten Test der Soll-Funktionalität eines Steuergeräts ermöglicht und zwar unter Berücksichtigung der Zeitabhängigkeit dieser Soll-Funktionalität, insbesondere ohne beispielsweise über den Umweg eines Fehlermodells der Soll-Funktionalität zu gehen.

Mit der formalsprachlichen Erfassung der Zeitabhängigkeit beinhaltenden Soll-Funktionalität ist gemeint, dass die formale Sprache semantisch eindeutig ist, womit umgangssprachliche Ungenauigkeiten vermieden werden. Das bedeutet nicht, dass die formale Sprache nicht umgangssprachlich verständlich ist.

Minimalanforderung für eine einzelne Soll-Funktionalität ist, dass sie eine Aktion und wenigstens eine erwartete Reaktion umfasst. Als Aktion kann beispielsweise aufgefasst werden, dass ein Knopf gedrückt wird. Als dadurch bedingte Reaktion der Soll-Funktion kann beispielsweise festgelegt sein, dass ein Alarm nach spätestens 100 ms aktiviert ist, wobei "spätestens nach 100 ms" die geforderte Zeitabhängigkeit der Soll-Funktionalität ist. Zu dem Funktionsumfang des Steuergeräts können selbstverständlich auch solche Soll-Funktionalitäten gehören, die keine Zeitabhängigkeit aufweisen; gefordert ist, dass wenigstens eine Soll-Funktionalität vorliegt, die eine Zeitabhängigkeit umfasst.

Das die Gesamtheit der Anforderungen darstellende Anforderungsmodell dient als Grundlage für die nachfolgend durchgeführte Erreichbarkeitsanalyse. Aufgabe der Erreichbarkeitsanalyse ist es, eine Abfolge von Aktionen aufzufinden, mit der das zu testende Steuergerät in einen bestimmten Endzustand überführt werden kann, wobei dies nur möglich ist, wenn das Steuergerät die vorausgesetzte Soll-Funktionalität aufweist. Die Erreichbarkeitsanalyse kann sich dabei aller Aktionen bedienen, die von dem Anforderungsmodell umfasst sind. Von besonderer Bedeutung ist hierbei, dass vorhandene Zeitabhängigkeiten der Soll-Funktionalität berücksichtigt werden, also nicht nur eine kausale Reihenfolge von Aktionen und Reaktionen eingehalten wird, sondern auch zulässige Zeitintervalle für Aktionen und Reaktionen in die Erreichbarkeitsanalyse Eingang finden.

Gemäß einer bevorzugten Ausgestaltung des erfindungsgemäßen Verfahrens ist vorgesehen, dass die Zeitabhängigkeit der Soll-Funktionalität in der Vorgabe eines Reaktionszeitintervalls der erwarteten Reaktion besteht. Ein solches Reaktionszeitintervall wird dem tatsächlichen Verhalten vieler technischer Systeme gerecht. So kann eine Soll-Funktionalität beispielsweise darin bestehen, dass die Reaktion auf eine Aktion dann noch zulässig und fehlerfrei ist, wenn diese Reaktion erst in einem bestimmten Zeitintervall nach der auslösenden Aktion auftritt.

Beispielsweise könnte eine Soll-Funktionalität darin bestehen, dass nach Verriegelung eines Fahrzeugs (Aktion) der Fahrzeugalarm frühestens nach einer Verzögerungszeit tₓ eingeschaltet wird, spätestens jedoch nach einer Verzögerungszeit von t_{y} nach dem auslösenden Ereignis. Dies sind praxisnahe Bedingungen, da die Antwortzeiten eines Steuergeräts auf eine bestimmte Aktion beispielsweise von dem aktuellen Zustand des Steuergeräts, seiner Auslastung, der Priorität der Aktion bzw. der Priorität zeitlich früher eingetretener Aktionen abhängen können oder auch von zeitlich nicht-deterministischen Komponenten des Steuergeräts, wie z. B. nicht-deterministischen Feldbussen.

Bei einer ganz besonders bevorzugten Ausgestaltung der Erfindung ist vorgesehen, dass die Erreichbarkeitsanalyse unter Vergabe wenigstens einer zusätzlichen Zeitrandbedingung erfolgt, wobei die zusätzliche Zeitrandbedingung die Berücksichtigung des vollständigen Reaktionszeitintervalls der Soll-Funktionalität sicherstellt, was vorzugsweise durch die Vorgabe der Grenze einer Zeitungleichung bzw. durch die Vorgabe dieser Zeitungleichung erfolgt. Diese Maßnahme hat den ganz besonders vorteilhaften Effekt, dass Testfälle durch die Erreichbarkeitsanalyse generiert werden können, die Reaktionszeitintervalle vollständig und fehlerfrei berücksichtigen.

Zur Verdeutlichung dieses Sachverhalts soll Bezug genommen werden auf das zuvor angeführte Beispiel der Verriegelung eines Fahrzeugs (Aktion), wobei der Verriegelungszeitpunkt mit tₛₜₐᵣₜ bezeichnet wird. Das Reaktionszeitintervall ist nach dem voranstehenden Beispiel [tₛₜₐᵣₜ + tₓ; tₛₜₐᵣₜ + t_{y}]. Wenn im Rahmen der Erreichbarkeitsanalyse eine weitere Zeitabhängigkeit zu berücksichtigen ist, die den Reaktionszeitpunkt dieses ersten Ereignisses - Aktivierung des Alarms - betrifft, können sich leicht Konflikte ergeben. Eine solche Zeitabhängigkeit könnte beispielsweise darin bestehen, dass gefordert wird, dass der Zeitpunkt der Aktivierung des Fahrzeugalarms - im folgenden mit tₑ bezeichnet - einem definierten aber noch nicht zeitlich fixierten Zeitpunkt t_{z} nachfolgt. Wenn dieser definierte, aber zeitlich noch nicht konkret festgelegte Zeitpunkt t_{z} innerhalb des Reaktionszeitintervalls [tₛₜₐᵣₜ + tₓ; tₛₜₐᵣₜ + t_{y}] liegt, dann führt dies dazu, dass ein Teil des zulässigen Reaktionszeitintervalls [tₛₜₐᵣₜ + tₓ; tₛₜₐᵣₜ + t_{y}] keine Berücksichtigung mehr findet. Es muß daher Sorge dafür getragen werden, dass diese zusätzliche Randbedingung tₑ > t_{z} durch eine zusätzliche Zeitrangbedingung ergänzt wird, beispielsweise durch die Anforderung, dass t_{z} vor dem Beginn des Reaktionszeitintervalls [tₛₜₐᵣₜ + tₓ; tₛₜₐᵣₜ + t_{y}] angesiedelt ist, also die Zeitungleichung t_{z} < tₛₜₐᵣₜ + tₓ gilt.

Sinngemäß ist zu verfahren, wenn gefordert ist, dass der Reaktionszeitpunkt tₑ vor einem bestimmten aber konkret noch nicht festgelegten Zeitpunkt t_{z} liegen muß, wobei hier zur Vermeidung von Zeitkonflikten die zusätzliche Zeitrandbedingung vorgesehen werden muss, dass der Zeitpunkt t_{z} hinter dem Reaktionszeitintervall liegen muss; es gilt folglich t_{z} > tₛₜₐᵣₜ + t_{y}.

Das zuvor erläuterte Verfahren der Einführung von zusätzlichen Zeitrandbedingungen zur Berücksichtigung des vollständigen Reaktionszeitintervalls ist besonders dann vorteilhaft anwendbar, wenn das erfindungsgemäße Verfahren einen Testfall durch Erreichbarkeitsanalyse in dem formalen Anforderungsmodell erzeugt, indem
a) zunächst in einem Startplan ein Initialzustand oder eine Initialaktion (start) und ein Endzustand oder eine Endaktion (end) jeweils durch die Auswahl wenigstens einer Zustandsgröße mit definiertem Zustand festgelegt wird,
b) in den Startplan eine Anforderung aus dem Anforderungsmodell zwischen den Initialzustand bzw. die Initialaktion (start) und den Endzustand bzw. die Endaktion (end) eingefügt wird, so dass ein Teilplan entsteht, und wobei die dadurch erzielte kausale Abdeckung erfasst wird, insbesondere durch kausale Verbindungen, und
c) gegebenenfalls in den Teilplan sukzessiv weitere Anforderungen aus dem Anforderungsmodell eingefügt werden, bis als Lösungsplan ein kausal lückenloser Pfad zwischen dem Initialzustand (start) und dem gewünschten Endzustand (end) erzielt wird.

Bevorzugt erfolgt die zu Beginn des Verfahrens stehende formalsprachliche Erfassung der Anforderungen durch eine kontrolliert natürliche Sprache, was den Vorteil mit sich bringt, dass trotz Verwendung lexikalischer, grammatischer und semantischer Restriktionen die Formulierung der Anforderungen umgangssprachlich verständlich bleibt.

Die Aufgabe ist ferner gelöst, mit einem Computerprogramm mit Programmcode-Mitteln, um alle mit Hilfe des vorgenannten Verfahrens vollzogenen Schritte durchzuführen, wenn das Programm auf einer Datenverarbeitungsanlage ausgeführt wird, genauso wie mit einem solchen Computerprogramm mit Programmcode-Mitteln, die auf einem computerlesbaren Datenträger gespeichert sind.

Gemäß einer weiteren Lehre der Erfindung wird die zuvor dargestellte Aufgabe bei einer Vorrichtung mit einer Testvorrichtung und einem mit der Testvorrichtung verbundenen Steuergerät zum Test des Steuergeräts auch dadurch gelöst, dass die Testvorrichtung so ausgestaltet ist, dass mit ihr das zuvor erläuterte Verfahren an dem Steuergerät ausgeführt wird.

Im Einzelnen gibt es nun eine Vielzahl von Möglichkeiten, das erfindungsgemäße Verfahren und die erfindungsgemäßeVorrichtung auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. In der Zeichnung zeigen
- Fig. 1: eine Anforderung ohne Vorbedingungen in grafischer Darstellung,
- Fig. 2: zwei Anforderungen mit Vorbedingungen und Zeitabhängigkeiten in grafischer Darstellung,
- Fig. 3a-3c: ein Ausführungsbeispiel für die Auflösung eines Konflikts von Zeitabhängigkeiten durch eine zusätzliche Zeitrandbedingung,
- Fig. 4a-4c: ein weiteres Ausführungsbeispiel zur Auflösung eines Konflikts von Zeitrandbedingungen durch Einfügung einer zusätzlichen Zeitrandbedingung,
- Fig. 5: ein Beispiel für eine ungeeignete kausale Verbindung zur Zustandsüberführung,
- Fig. 6: ein Ausführungsbeispiel für einen Startplan als Grundlage einer Erreichbarkeitsanalyse,
- Fig. 7: den Startplan aus Fig. 6, erweitert um eine kausale Verbindung zur Zustandsüberführung und
- Fig. 8: den Startplan aus den Fig. 6 und 7 nach erfolgreicher Erreichbarkeitsanalyse.

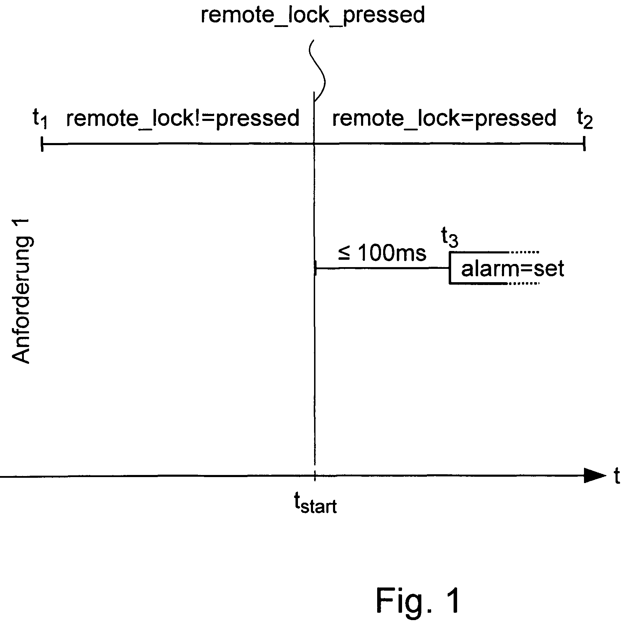

Die Fig. 1 bis 8 stellen verschiedene Aspekte eines Verfahrens zum Test eines Steuergeräts mit einer Testvorrichtung dar, wobei das Steuergerät wenigstens eine Zustandsgröße und wenigstens eine eine Zeitabhängigkeit beinhaltende Ist-Funktionalität aufweist und das Steuergerät und die Testvorrichtung über eine Signalschnittstelle miteinander verbunden sind, wobei zunächst die formalsprachliche Erfassung wenigstens einer eine Zeitabhängigkeit beinhaltenden Soll-Funktionalität als Anforderung erfolgt, wobei die Soll-Funktionalität wenigstens eine Aktion und wenigstens eine erwartete Reaktion umfasst, dann wenigstens ein Anforderungsmodells aus den Anforderungen erzeugt wird, nachfolgend Testfälle durch wenigstens eine in dem Anforderungsmodell durchgeführte Erreichbarkeitsanalyse unter Berücksichtigung der Zeitabhängigkeit der Soll-Funktionalität erzeugt werden, und abschließend die Testfälle in Signalmuster übersetzt werden, das Steuergerät über die Signalschnittstelle mit den Signalmustern durch die Testvorrichtung beaufschlagt wird und die interessierenden Zustandsgrößen des Steuergeräts mit der Testvorrichtung erfasst werden.

Die Sollfunktionalität des Steuergeräts kann beispielsweise tabellarisch aufgeführt sein, wie dies nachfolgend durch die Tabellen 1 bis 3 dargestellt ist:

**Tabelle 1: "Anforderung 1"**

| | |
|---|---|
| Vorbedingung | - |
| Aktion | remote lock is pressed. |
| Nachbedingung | - |
| Reaktion | alarm is set at the latest after 100 ms. |

**Tabelle 2: "Anforderung 2"**

| | |
|---|---|
| Vorbedingung | alarm is set for less than 6 sec. |
| Aktion | driver door is open. |
| Nachbedingung | - |
| Reaktion | alarm is unset. |

**Tabelle 3: "Anforderung 3"**

| | |
|---|---|
| Vorbedingung | alarm is set for more than 6 sec. |
| Aktion | driver door is open. |
| Nachbedingung | - |
| Reaktion | sounder is active. |

Die in den Tabellen dargestellten Anforderungen korrespondieren mit Praxisanforderungen für Soll-Funktionalitäten eines Steuergeräts im KFZ-Bereich, die gleichzeitig natürlich auch Anforderungen an das Verhalten des Steuergeräts sind. Die in den Tabellen 1 bis 3 gewählte Darstellung der Anforderungen ist eine kontrolliert natürlichsprachliche Darstellung. "Kontrolliert" deshalb, weil nur ausgewählte semantische Komponenten der natürlichen Sprache zugelassen sind, so dass die kontrolliert natürliche Sprache semantisch eindeutig ist; die Darstellung ist in diesem Sinne also auch eine formalsprachliche Erfassung der Soll-Funktionalität.

Es ist ohne weiteres zu erkennen, dass Anforderung 1, die das Einschalten des Fahrzeugalarms betrifft, frei von jeglicher Vorbedingung ist. Die Zeitabhängigkeit besteht hier darin, dass spätestens nach 100 ms nach Betätigen des Funk-Fahrzeugschlosses (remote lock) der Fahrzeugalarm (alarm) aktiviert ist. Diese Anforderung ist in Fig. 1 graphisch anhand eines Zeitstrahls dargestellt. Zum Zeitpunkt tₛₜₐᵣₜ wird das Funk-Fahrzeugschloß betätigt (Aktion: remote_lock_pressed), woraufhin das Signal "alarm" auf den Wert "set" gesetzt wird und zwar spätestens nach 100 ms. Das Signal "alarm" ist dann - solange keine das Signal in anderer Weise beeinflussende Aktion eintritt - dauerhaft gesetzt, angedeutet durch das nach rechts offene - punktierte - Zeitintervall. In den Tabellen 2 und 3 ist anhand von zwei Beispielen, die ebenfalls den Fahrzeugalarm betreffen, jeweils eine praxisnahe Soll-Funktionalität beschrieben, bei der das Hervorrufen einer Reaktion durch eine Aktion geknüpft ist an eine Vorbedingung.

Anforderung 2 besagt, dass der Alarm deaktiviert ist, wenn die Fahrertür geöffnet wird, vorausgesetzt, dass der Alarm zuvor für weniger als sechs Sekunden aktiviert gewesen ist.

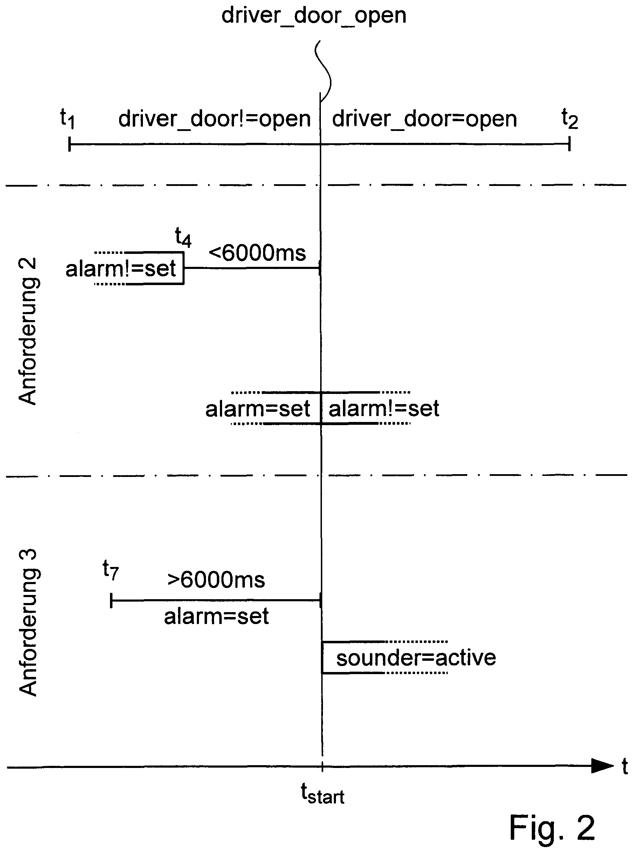

Anforderung 3 besagt, dass der Alarmgeber "sounder" aktiviert wird, falls die Fahrertür geöffnet wird, vorausgesetzt, dass der Alarm zuvor für mehr als sechs Sekunden aktiviert gewesen ist. Dieses Verhalten ist in Fig. 2 anschaulich dargestellt. Hier ist die Aktion "driver_door_open" zum Zeitpunkt tₛₜₐᵣₜ aktiviert, so dass das Signal "driver_door" von "!open" auf "open" wechselt. Das vorgestellte Ausrufezeichen deutet an, dass das entsprechende Signal nicht gesetzt ist. Die natürlich-sprachliche Erfassung der Soll-Funktionalität wird sinnvollerweise in eine mathematisch formalsprachliche Darstellung umgesetzt, die solche zusätzlichen Bestandteile enthält, die eine mathematische Behandlung der Informationen erlauben, wie z. B. mathematische Bezeichner für die zu berücksichtigenden Zeitintervallgrenzen. Anforderung 1 sieht mathematisch formalsprachlich umgesetzt wie folgt aus, wobei darauf hinzuweisen ist, dass diese Umsetzung von der kontrolliert-natürlichsprachlichen Darstellung in die mathematische formalsprachliche Darstellung automatisierbar ist und vorliegend auch automatisch - nämlich rechnergestützt - erfolgt:

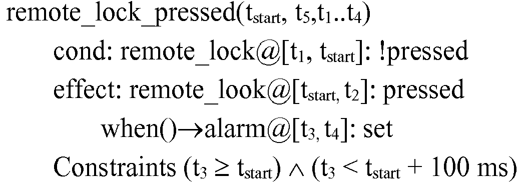

Die Anforderungen 2 und 3 sind formalsprachlich wie folgt formuliert: 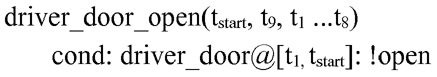 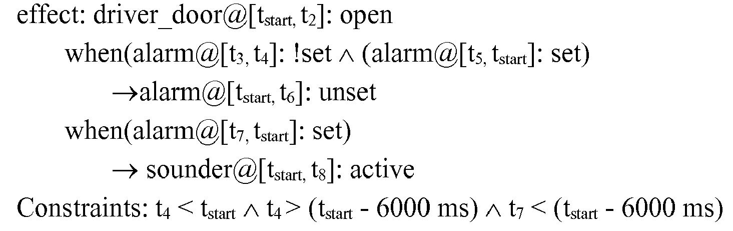 "cond" steht dabei für eine Bedingung und hinter dem Begriff "Constraints" werden die Zeitabhängigkeiten angeführt. Unter "driver_door@[t₁, tₛₜₐᵣₜ]:!open" ist zu verstehen, dass das Signal "driver_door" im Zeitinvervall [t₁, tₛₜₐᵣₜ] den Wert "!open" hat, also geschlossen ist. Die in der formalsprachlichen Erfassung der Soll-Funktionalität vorkommenden Zeitpunkte t₁ bis t₉ sind noch nicht mit einem konkreten Wert versehene aber funktional bestimmte Zeitpunkte, die in einer bestimmten Abhängigkeit zueinander stehen, die sich aus dem funktionalen Zusammenhang ergibt bzw. sich im Rahmen der Erreichbarkeitsanalyse herausstellt.

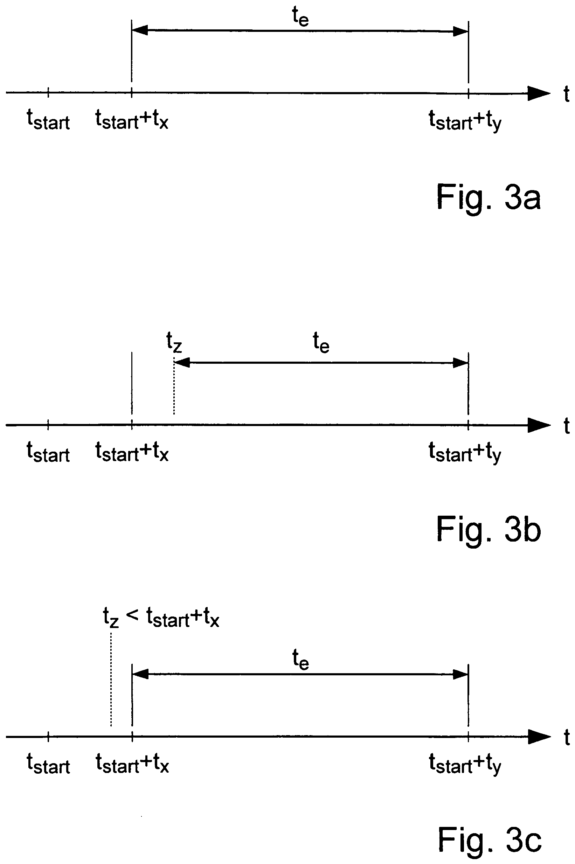

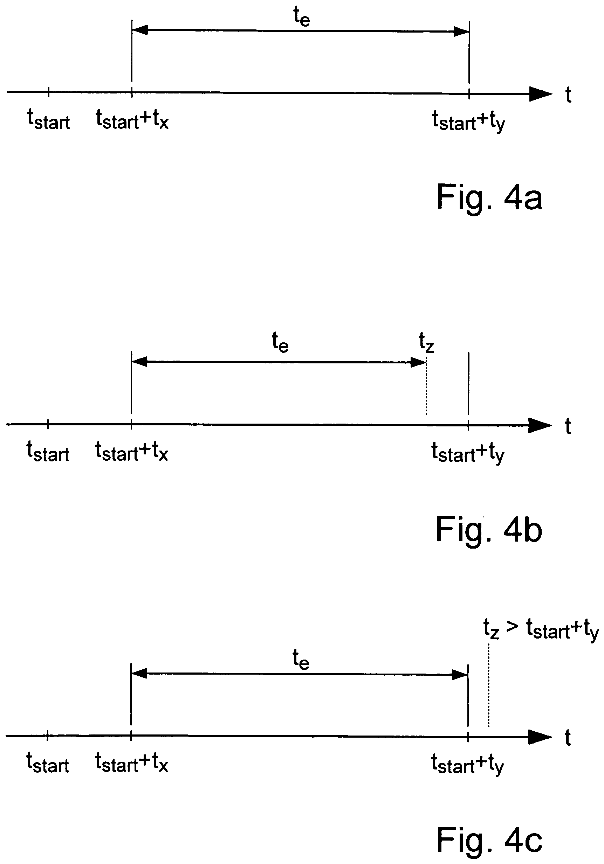

Anforderung 1 ist ein Beispiel dafür, dass die Zeitabhängigkeit der Soll-Funktionalität in der Vorgabe eines Reaktionszeitintervalls der erwarteten Reaktion besteht, hier nämlich die Reaktion, dass das Signal "alarm" auf den Wert "set" gesetzt wird. Im allgemeinen Fall muss ein solches Reaktionszeitintervall natürlich nicht direkt an die die Reaktion auslösende Aktion anschließen. Vielmehr kann das Reaktionszeitintervall auch beabstandet sein von dem Zeitpunkt tₛₜₐᵣₜ der auslösenden Aktion; dies ist in den Fig. 3 und 4 anschaulich dargestellt.

Wie zuvor schon ausgeführt worden ist, besteht die Aufgabe bei der Testfallgenerierung darin, das zu testende Steuergerät mit einer Testsequenz - Abfolge von Anregungssignalen - zu beaufschlagen, damit wenigstens eine bestimmte Aktion und die dadurch ausgelöste Reaktion beobachtet werden können.

Beim Durchlaufen einer solchen Testsequenz ist es nun ohne weiteres denkbar, dass ein bestimmtes Ereignis an mehrere Zeitabhängigkeiten geknüpft ist. In den Fig. 3a und 4a ist zunächst jeweils die gleiche - einfache - Zeitabhängigkeit dargestellt, nämlich eine Zeitabhängigkeit in Form eines Reaktionszeitintervalls. Auf die auslösende Aktion zum Zeitpunkt tₛₜₐᵣₜ kann die Reaktion zum Zeitpunkt tₑ innerhalb des Reaktionszeitintervalls [tₛₜₐᵣₜ + tₓ; tₛₜₐᵣₜ + t_{y}] ausgelöst werden. In Fig. 3b ist eine weitere an tₑ geknüpfte Zeitabhängigkeit dargestellt, nämlich die Bedingung, dass tₑ zu einem Zeitpunkt eintritt, der später als ein Vorgabezeitpunkt t_{z} ist. Dies hat zur Konsequenz, dass wenn t_{z} innerhalb des Intervalls [tstart + tₓ; tₛₜₐᵣₜ + t_{y}] angesiedelt ist, ein Teil des Intervalls - nämlich [tₛₜₐᵣₜ + tₓ; tₛₜₐᵣₜ + t_{z}] - nicht mehr vollständig berücksichtigt werden kann. Ein solcher Konflikt zwischen zwei an den Eintritt eines Ereignisses geknüpfter Zeitabhängigkeiten wird hier dadurch gelöst, dass die Erreichbarkeitsanalyse unter Vergabe wenigstens einer zusätzlichen Zeitrandbedingung erfolgt, so dass die zusätzliche Zeitrandbedingung die Berücksichtigung des vollständigen Reaktionszeitintervalls sicherstellt. Im Ausführungsbeispiel gemäß Fig. 3 bedeutet dies, dass die zusätzliche Bedingung t_{z} < tₛₜₐᵣₜ + tₓ eingefügt wird, womit für den Eintritt des Reaktionsereignisses alle Zeitpunkte tₑ innerhalb des Intervalls [tₛₜₐᵣₜ + tₓ; tₛₜₐᵣₜ + t_{y}] wieder möglich sind.

In Fig. 4 ist der korrespondierende Fall dargestellt, dass nämlich die zusätzliche Zeitabhängigkeit tₑ < t_{z} vorliegt, die dann problematisch ist, wenn t_{z} vor dem Zeitpunkt tₛₜₐᵣₜ + t_{y} liegt. Dieser Konflikt kann durch die zusätzliche Zeitrandbedingung beseitigt werden, dass t_{z} größer ist als (tₛₜₐᵣₜ + t_{y}).

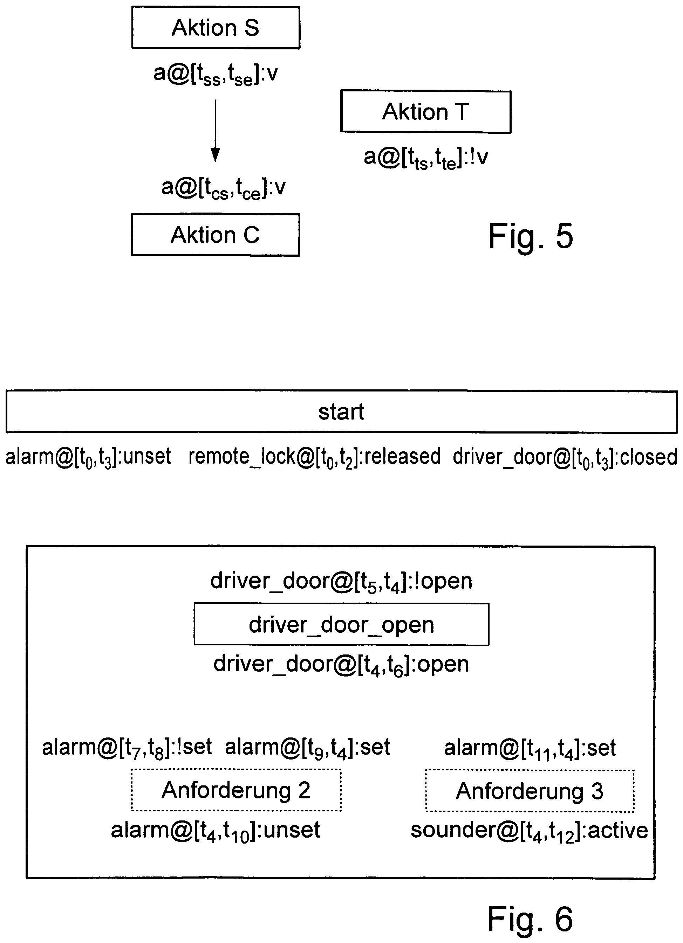

In den Fig. 5 bis 8 ist insgesamt dargestellt, wie die Erreichbarkeitsanalyse bevorzugt ausgeführt wird. In den Fig. 6, 7 und 8 ist die Erreichbarkeitsanalyse unter Zuhilfenahme der zuvor dargestellten Anforderungen 1 bis 3 dargestellt. Fig. 6 zeigt einen Startplan der Erreichbarkeitsanalyse mit einem Initialzustand bzw. einer Initialaktion "start" und einem Endzustand bzw. einer Endaktion "driver_door_open", die entweder in Anforderung 2 oder in Anforderung 3 münden kann, je nachdem, welchen Wert das Signal "alarm" aufweist.

In dem in Fig. 6 dargestellten Beispiel bewirkt die Initialaktion lediglich einen bestimmten Initialzustand des Systems, in dem das Signal "alarm" nicht gesetzt ist, das Funkschloß nicht betätigt ist und die Fahrertür geschlossen ist. Ziel der Erreichbarkeitsanalyse ist es in dem hier dargestellten Beispiel, die Bedingungen von Anforderung 2 zu erfüllen, so dass ein positiver Testfall für Anforderung 2 erstellt wird. Um von dem Initialzustand ausgehend Anforderung 2 erfüllen zu können, müssen insgesamt drei Bedingungen - in der richtigen kausalen und zeitlichen Reihenfolge - erfüllt werden, nämlich einerseits "driver_door@[t₅, t₄]:!open" und andererseits "alarm@[t₇, t₈]:!set" sowie "alarm@[t₉,t₄]:set".

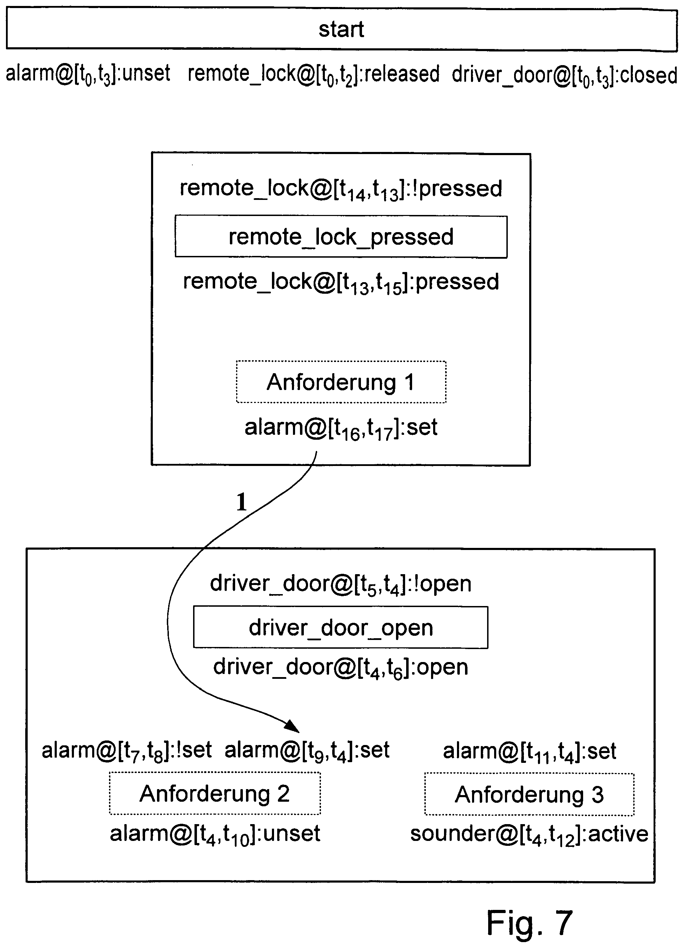

In einem nächsten Schritt der Erreichbarkeitsanalyse wird in den Startplan eine Anforderung aus dem Anforderungsmodell - also aus der Gesamtheit aller bekannten Anforderungen - zwischen den Initialzustand bzw. die Initialaktion "start" und den Endzustand bzw. die Endaktion "end" bzw. "driver door open" eingefügt, so dass ein Teilplan entsteht, wobei die dadurch erzielte kausale Abdeckung erfasst wird. In dem Ausführungsbeispiel gemäß Fig. 7 wird die kausale Abdeckung durch die kausale Verbindung 1 vermerkt. Das bedeutet nichts anderes, als dass das Erfüllen von Anforderung 1 das Signal "alarm" setzt, wobei das gesetzte Signal "alarm" wiederum eine Vorraussetzung ist, um überhaupt Anforderung 2 erfüllen zu können. Dazu tritt eine weitere, nämlich zeitliche Randbedingung. Die Vorbedingung "alarm@[t₉, t₄]:set" kann von der Reaktion "alarm@[t₁₆, t₁₇]:set" natürlich nur dann beeinflusst werden, wenn das Intervall [t₉, t₄] von dem Intervall [t₁₆, t₁₇] umfasst ist, wenn folglich gilt t₁₆ ≤ t₉ und t₁₇ ≥ t₄. Insoweit unterstützt also die Aktion "remote_lock_pressed" bzw. die damit verbunden Anforderung 1 die Anforderung 2. Ganz grundsätzlich müssen folglich alle offenen Bedingungen und damit korrespondierende unterstützende Aktionen aufgefunden und einander zugeordnet werden sowie die entsprechenden zeitlichen Randbedingungen formuliert werden.

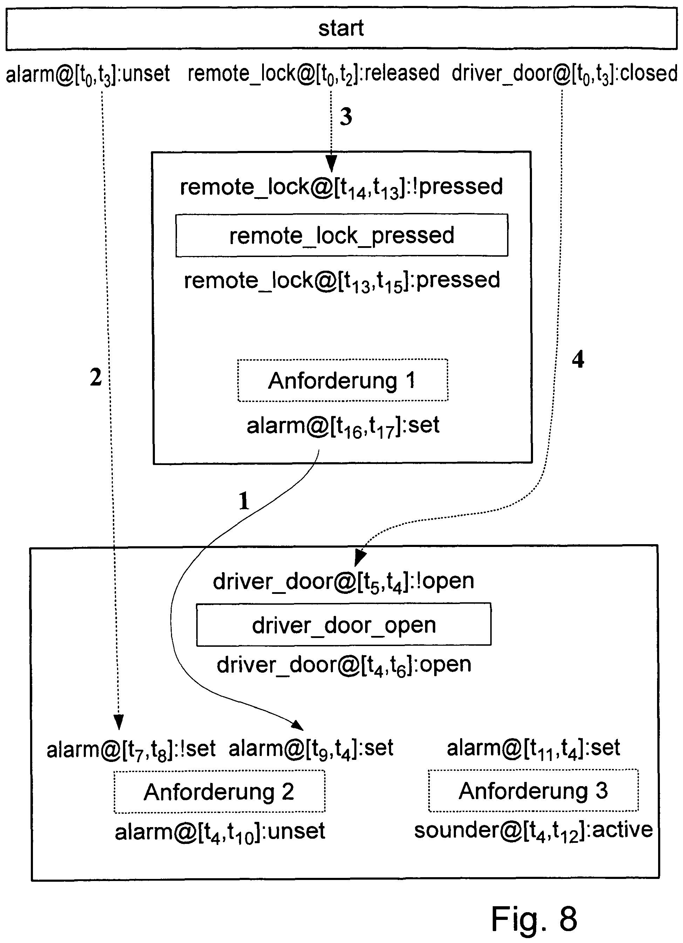

In Fig. 8 sind weitere kausale - also unterstützende - Verbindungen 2, 3, 4 eingetragen, die kenntlich machen, welches Reaktion einer Aktion welche Vorbedingung einer anderen Aktion unterstützt. So kann die Reaktion "alarm@[t₀, t₃]:unset" der Aktion "start" die Vorbedingung "alarm@[t₇, t₈]:!set" unterstützen (siehe kausale Verbindung 2), und es kann ferner das Resultat "remote_lock@[t₀,t₂]:released" der Aktion "start" die Vorbedingung "remote_lock@[t₁₄; t₁₃]:!pressed" der Aktion "remote_lock_pressed" unterstützen (siehe kausale Verbindung 3), und schließlich kann das Resultat "driver_door@[t₀, t₃]:closed" der Aktion "start" die Vorbedingung "driver_door@[t₅, t₄]:!open" der Aktion "driver_door_open" unterstützen (siehe kausale Verbindung 4).

In dem Beispiel gemäß den Fig. 6, 7 und 8 ist die kausale Abdeckung durch Einsetzen der Aktion "remote_lock_pressed" vollständig. Für den Fall, dass keine vollständige kausale Abdeckung erzielt werden konnte, werden in den unvollständigen Teilplan sukzessiv weitere Anforderungen aus dem Anforderungsmodell eingefügt, bis als Lösungsplan ein kausal lückenloser Pfad zwischen dem Initialzustand "start" und dem gewünschten Endzustand "end" bzw. "alarm@[t4, t10]:unset" bzw. der Endaktion erzielt wird. Aufgrund des sukzessiven Einfügens von Anforderungen ist vorliegend vorgesehen, dass die Anforderungen weitgehend atomisiert werden und das Anforderungsmodell auf einer Komposition atomisierter Anforderungen beruht. Dadurch lässt sich die Erreichbarkeitsanalyse sehr feinschrittig und zielgenau durchführen, d.h. unter Vermeidung vieler zur Zielerreichung unnötiger Komponenten, insbesondere unnötiger Reaktionen und Vorbedingungen, die letzlich die aufgefundenen Testfälle nur unnötig aufblähen.

Die kausalen Verbindungen 1, 2, 3, 4 zeigen lediglich die möglichen kausalen Wirkzusammenhänge auf. Sie berücksichtigen jedoch bislang noch nicht die zeitlichen Abhängigkeiten, die ebenfalls sinnvoll erfüllt werden müssen. Demzufolge ist in dem dargestellten Verfahren vorgesehen, dass eine kausale Inkonsistenz zwischen Anforderungen im Teilplan durch das Setzen wenigstens einer zeitlichen Randbedingung aufgelöst wird, wobei sich als Lösungsstrategien insbesondere die Demotion und/oder die Promotion einer als störend erkannten Reaktion bzw. der diese Reaktion auslösenden Aktion anbieten. Eine weitere Methode zur Vermeidung bzw. Beseitigung einer kausalen Inkonsistenz zwischen Anforderungen im Teilplan oder im Lösungsplan ist die Konfrontation, nämlich das Vermeiden des Ausgangszustandes, der bzw. der Vorbedingung, die Voraussetzung für die Inkonsistenz ist.

Bei dem Lösungsplan gemäß Fig. 8 ist zu erkennen, dass eine mögliche kausale Inkonsistenz besteht zwischen der kausalen Verbindung 1 und der Reaktion "alarm@[t₀, t₃]:unset" der Aktion "start", da das Rücksetzen des Alarms die kausale Verbindung 1 zunichte macht. Da diese Reaktion unbedingt ist, kann die Inkonsistenz entweder durch Demotion - zeitliches Rückversetzen - oder durch Promotion - zeitliches Vorversetzen - der Reaktion beseitigt werden. In diesem Fall führt die Promotion, also das zeitliche Verschieben hinter die kausale Verbindung 1 der störenden Reaktion zu einer inkonsistenten zeitlichen Randbedingung, da t₄ < t₀ angenommen werden müsste, aber alle von t₀ verschiedenen Zeitpunkte zwingend größer sein müssen als t₀, da der gesammte Plan der Erreichbarkeitsanalyse überhaupt erst zum Zeitpunkt t₀ beginnt. Deshalb ist zur Auflösung dieses Konflikts nur eine Demotion geeignet und zwar durch Einfügen der ordnenden Zeitrandbedingungen t₃ ≤ t₁₆ und t₃ < t₉. Das bedeutet, dass die kausale Verbindung 1 den Effekt der kausalen Verbindung 2 auf jeden Fall überschreibt, da das Zeitintervall [t₀, t₃] sowohl von dem Zeitintervall [t₁₆, t₁₇] als auch vor dem Zeitintervall [t₉, t₄] vorgesehen ist.

Da t₁₆ der Startzeitpunkt einer Reaktion ist, muss eine zusätzliche, schärfere Randbedingung erfüllt werden, nämlich t₃ ≤ t₁₃.

Das Ergebnis der zusätzlichen Zeitrandbedingungen führt zu einem System von Zeitrandbedingungen, das die Startzeitpunkte der verschiedenen Aktionen zueinander ordnet. Die Lösung ist hier, dass die Aktion "remote_lock_pressed" ausgeführt werden muss vor der Aktion "driver door open" und "driver door open" muss in weniger als 6000 ms ausgeführt werden, nachdem das Signal "alarm" gesetzt worden ist.

Das vorbeschriebene Verfahren wird erfindungsgemäß softwareimplementiert und vollautomatisch auf einer hier nicht näher dargestellten Testvorrichtung durchgeführt.

## Patentansprüche

1. Verfahren zum Test eines Steuergeräts mit einer Testvorrichtung, wobei das Steuergerät wenigstens eine Zustandsgröße und wenigstens eine eine Zeitabhängigkeit beinhaltende Ist-Funktionalität aufweist und das Steuergerät und die Testvorrichtung über eine Signalschnittstelle miteinander verbunden sind, umfassend die folgenden Verfahrensschritte:
- formalsprachliche Erfassung wenigstens einer eine Zeitabhängigkeit beinhaltenden Soll-Funktionalität als Anforderung, wobei mit der formalsprachlichen Erfassung der Zeitabhängigkeit beinhaltenden Soll-Funktionalität gemeint ist, dass die formale Sprache semantisch eindeutig ist, womit umgangssprachliche Ungenauigkeiten vermieden werden und wobei die Soll-Funktionalität wenigstens eine Aktion und wenigstens eine erwartete Reaktion umfasst,
- Erzeugen wenigstens eines die Gesamtheit der Anforderungen darstellendes Anforderungsmodells aus den Anforderungen,
- Erzeugung von Testfällen durch wenigstens eine in dem Anforderungsmodell durchgeführten Erreichbarkeitsanalyse unter Berücksichtigung der Zeitabhängigkeit der Soll-Funktionalität, ohne über den Umweg eines Fehlermodells der Soll-Funktionalität zu gehen, wobei die Zeitabhängigkeit der Soll-Funktionalität in der Vorgabe eines Reaktionszeitintervalls der erwarteten Reaktion besteht,
- Übersetzen der Testfälle in Signalmuster, Beaufschlagung des Steuergeräts über die Signalschnittstelle mit den Signalmustern durch die Testvorrichtung und Erfassen der interessierenden Zustandsgrößen des Steuergeräts mit der Testvorrichtung.

2. Verfahren nach Anspruch 1, **dadurch gekennzeichnet, dass** die Erreichbarkeitsanalyse unter Vergabe wenigstens einer zusätzlichen Zeitrandbedingung erfolgt, wobei die zusätzlichen Zeitrandbedingungen die Berücksichtigung des vollständigen Reaktionszeitintervalls sicherstellt, insbesondere durch Vorgabe der Grenze einer Zeitungleichung.

3. Verfahren nach Anspruch 1 oder 2, **dadurch gekennzeichnet, dass** die Soll-Funktionalität und damit die Anforderung ferner wenigstens einen Vorbedingung und/oder wenigstens einen Nachbedingung umfassen.

4. Verfahren nach einem der Ansprüche 1 bis 3, **dadurch gekennzeichnet, dass** der Testfall durch Erreichbarkeitsanalyse in dem formalen Anforderungsmodell erzeugt wird, indem
a) zunächst in einem Startplan ein Initialzustand oder eine Initialaktion (start) und ein Endzustand oder eine Endaktion (end) jeweils durch die Auswahl wenigstens einer Zustandsgröße mit definiertem Zustand festgelegt wird,
b) in den Startplan eine Anforderung aus dem Anforderungsmodell zwischen den Initialzustand bzw. die Initialaktion (start) und den Endzustand bzw. die Endaktion (end) eingefügt wird, so dass ein Teilplan entsteht, und wobei die dadurch erzielte kausale Abdeckung erfasst wird, insbesondere durch kausale Verbindungen (1, 2, 3, 4), und
c) gegebenenfalls in den Teilplan sukzessiv weitere Anforderungen aus dem Anforderungsmodell eingefügt werden, bis als Lösungsplan ein kausal lückenloser Pfad zwischen dem Initialzustand (start) und dem gewünschten Endzustand (end) erzielt wird.

5. Verfahren nach Anspruch 4, **dadurch gekennzeichnet, dass** eine kausale Inkonsistenz zwischen Anforderungen im Teilplan oder im Lösungsplan durch das Setzen wenigstens einer zeitlichen Randbedingung aufgelöst wird, insbesondere durch Demotion und/oder Promotion.

6. Verfahren nach einem der Ansprüche 4 oder 5, **dadurch gekennzeichnet, dass** eine kausale Inkonsistenz zwischen Anforderungen im Teilplan oder im Lösungsplan durch Konfrontation vermieden wird, nämlich durch Vermeidung des Ausgangszustandes, der Voraussetzung für die Inkonsistenz ist.

7. Verfahren nach einem der Ansprüche 1 bis 6, **dadurch gekennzeichnet, dass** die Anforderungen atomisiert werden und das Anforderungsmodell auf einer Komposition atomisierter Anforderungen beruht.

8. Verfahren nach einem der Ansprüche 1 bis 7, **dadurch gekennzeichnet, dass** die formalsprachliche Erfassung der Anforderungen durch eine kontrolliert natürliche Sprache erfolgt.

9. Verfahren nach einem der Ansprüche 1 bis 8, **dadurch gekennzeichnet, dass** aus mehreren zum Test einer Soll-Funktionalität ermittelten Anforderungen diejenige mit der geringsten Anzahl notwendiger Aktionen ausgewählt wird.

10. Computerprogramm mit Programmcode-Mitteln, um alle mit Hilfe des Verfahrens nach einem der Ansprüchen 1 bis 9 vollzogenen Schritte durchzuführen, wenn das Programm auf einer Datenverarbeitungsanlage ausgeführt wird.

11. Speichervorrichtung zum Speichern des Computerprogramms des Anspruchs 10.

12. Vorrichtung umfassend eine Testvorrichtung und ein Steuergerät zum Test des Steuergeräts, wobei das Steuergerät über Zustandsgrößen verfügt und die Testvorrichtung mit dem Steuergerät über eine definierte Signalschnittstelle verbunden ist,
**dadurch gekennzeichnet,**
**dass** die Testvorrichtung so ausgestaltet ist, dass mit ihr das Verfahren gemäß einem der Ansprüche 1 bis 9 an dem Steuergerät ausgeführt wird.

## Claims

1. Method for testing a control unit with a test device, wherein the control unit has at least one state variable and at least one actual functionality including a time dependence, and the control unit and the test device are connected to one another via a signal interface, comprising the following method steps:
- formal language detection of at least one target functionality including a time dependency as a request, wherein the formal language detection of the target functionality including the time dependence means that the formal language is semantically unique, thereby avoiding colloquial inaccuracies, and wherein the target functionality comprises at least one action and at least one expected reaction,
- generation of at least one request model from the requests representing the totality of the requests,
- generation of test cases using at least one accessibility analysis performed in the request model, taking into account the time dependence of the target functionality without taking the detour of an error model of the target functionality, wherein the time dependence of the target functionality consists of specifying a reaction time interval of the expected reaction,
- translation of the test cases into signal patterns, application of the signal patterns to the control unit via the signal interface by the test device and recording the state variables of interest of the control unit with the test device.

2. Method according to claim 1, **characterized in that** the accessibility analysis is carried out by assigning at least one additional time boundary condition, wherein the additional time boundary conditions ensure that the complete reaction time interval is taken into account, in particular by specifying the limit of a time inequality.

3. Method according to claim 1 or 2, **characterized in that** the target functionality and thus the request further comprise at least one precondition and/or at least one postcondition.

4. Method according to any one of claims 1 to 3, **characterized in that** the test case is generated by accessibility analysis in the formal request model **in that**
a) an initial state or an initial action (start) and a final state or a final action (end) are first determined in a start plan in each case by selecting at least one state variable having a defined state,
b) a request from the request model is inserted into the start plan between the initial state or the initial action (start) and the final state or the final action (end), so that a sub-plan is created, and wherein the causal coverage thereby obtained is detected, in particular by causal connections (1, 2, 3, 4), and
c) if necessary, further requests from the request model are successively inserted into the sub-plan until a causally complete path between the initial state (start) and the target final state (end) is achieved as the solution plan.

5. Method according to claim 4, **characterized in that** a causal inconsistency between requests in the sub-plan or in the solution plan is resolved by setting at least one temporal boundary condition, in particular by demotion and/or promotion.

6. Method according to any one of claims 4 or 5, **characterized in that** a causal inconsistency between requests in the sub-plan or in the solution plan is avoided by confrontation, namely by avoiding the original state which is a prerequisite for the inconsistency.

7. Method according to any one of claims 1 to 6, **characterized in that** the requests are atomized and the request model is based on a composition of atomized requests.

8. Method according to any one of claims 1 to 7, **characterized in that** the formal language recording of the requests is carried out using a controlled natural language.

9. Method according to any one of claims 1 to 8, **characterized in that** from a plurality of requests determined for testing a target functionality, the one with the lowest number of necessary actions is selected.

10. Computer program with program code means for carrying out all the steps performed with the help of the method according to any one of claims 1 to 9 when the program is executed on a data processing system.

11. Storage device for storing the computer program of claim 10.

12. Device comprising a test device and a control unit for testing the control unit, wherein the control unit has state variables and the test device is connected to the control unit via a defined signal interface,
**characterized in**
**that** the test device is designed in such a manner that it carries out the method according to any one of claims 1 to 9 on the control unit.

## Revendications

1. Procédé pour soumettre à essai un contrôleur avec un dispositif d'essai, le contrôleur possédant au moins une grandeur d'état et au moins une fonctionnalité réelle contenant une dépendance au temps, et le contrôleur et le dispositif d'essai étant reliés l'un à l'autre par le biais d'une interface de signal, comprenant les étapes de procédé suivantes :
- acquisition en langage formel d'au moins une fonctionnalité voulue contenant une dépendance au temps en tant qu'exigence, l'acquisition en langage formel de la fonctionnalité voulue contenant une dépendance au temps voulant dire que le langage formel est sémantiquement univoque, des imprécisions liées au langage courant étant évitées et la fonctionnalité voulue comportant au moins une action et au moins une réaction attendue,
- génération, à partir des exigences, d'au moins un modèle d'exigence qui représente l'ensemble des exigences,
- génération d'essais élémentaires par au moins une analyse d'accessibilité exécutée dans le modèle d'exigence en tenant compte de la dépendance au temps de la fonctionnalité voulue, sans passer par le détour d'un modèle d'erreur de la fonctionnalité voulue, la dépendance au temps de la fonctionnalité voulue consistant à indiquer un intervalle de temps de réaction de la réaction attendue,
- conversion des essais élémentaires en modèles de signal, sollicitation du contrôleur avec les modèles de signal par le biais de l'interface de signal par le dispositif d'essai et acquisition des grandeurs d'état intéressantes du contrôleur avec le dispositif d'essai.

2. Procédé selon la revendication 1, **caractérisé en ce que** l'analyse d'accessibilité est effectuée en attribuant au moins une condition limite de temps supplémentaire, les conditions limites de temps supplémentaires garantissant la prise en compte de l'intervalle de temps de réaction complet, notamment par indication de la limite d'inégalité de temps.

3. Procédé selon la revendication 1 ou 2, **caractérisé en ce que** la fonctionnalité voulue et ainsi l'exigence comprenant en outre au moins une condition préalable et/ou au moins une postcondition.

4. Procédé selon l'une des revendications 1 à 3, **caractérisé en ce que** l'essai élémentaire est généré par analyse d'accessibilité dans le modèle d'exigence formel en
a) fixant tout d'abord, dans un plan de départ, un état initial ou une action initiale (départ) et un état final ou une action finale (fin) respectivement par la sélection d'au moins une grandeur d'état ayant un état défini,
b) insérant, dans le plan de départ, une exigence issue du modèle d'exigence entre l'état initial ou l'action initiale (départ) et l'état final ou l'action finale (fin), de sorte qu'il en résulte un plan partiel, et la couverture causale ainsi obtenue étant acquise, notamment pas des liaisons causales (1, 2, 3, 4) et
c) insérant éventuellement, dans le plan partiel, successivement des exigences supplémentaires issues du modèle d'exigence jusqu'à obtenir en tant que plan de solution un chemin en causalité sans interruption entre l'état initial (départ) et l'état final (fin) souhaité.

5. Procédé selon la revendication 4, **caractérisé en ce qu'**une incohérence causale entre les exigences dans le plan partiel ou dans le plan de solution est résolue par la mise en place d'au moins une condition limite temporelle, notamment par rétrogradation et/ou promotion.

6. Procédé selon l'une des revendications 4 et 5, **caractérisé en ce qu'**une incohérence causale entre les exigences dans le plan partiel ou dans le plan de solution est évitée par confrontation, à savoir en évitant l'état initial qui est la condition préalable à l'incohérence.

7. Procédé selon l'une des revendications 1 à 6, **caractérisé en ce que** les exigences sont atomisées et le modèle d'exigence s'appuie sur une composition d'exigences atomisées.

8. Procédé selon l'une des revendications 1 à 7, **caractérisé en ce que** l'acquisition en langage formel des exigences est effectuée par un langage naturel de manière contrôlée.

9. Procédé selon l'une des revendications 1 à 8, **caractérisé en ce que** l'exigence ayant le plus petit nombre d'actions nécessaires est sélectionnée parmi plusieurs exigences déterminées pour l'essai d'une fonctionnalité voulue.

10. Programme informatique comprenant des moyens de code de programme pour exécuter toutes les étapes réalisées à l'aide du procédé selon l'une des revendications 1 à 9 lorsque le programme est exécuté sur un équipement de traitement de données.

11. Dispositif de mémorisation destiné à mémoriser le programme informatique selon la revendication 10.

12. Dispositif comprenant un dispositif d'essai et un contrôleur pour soumettre à essai le contrôleur, le contrôleur disposant de grandeurs d'état et le dispositif d'essai étant relié au contrôleur par le biais d'une interface de signal définie,
**caractérisé en ce**
**que** le dispositif d'essai est configuré de telle sorte que le procédé selon l'une des revendications 1 à 9 est mis en œuvre avec lui sur le contrôleur.
